# DEMANDE DE BREVET EUROPEEN

(11) **EP 4 389 723 A1**
(43) Date de publication de la demande: **26.06.2024**
(21) Numéro de dépôt: 22216574.8
(22) Date de dépôt: 23.12.2022
(51) Int. Cl.: C04B 35/48, B32B 18/00, G04B 45/00, G04B 37/22, C04B 35/622, C04B 35/645

(54) **PROCÉDÉ POUR LA FABRICATION D'UNE PIÈCE EN CÉRAMIQUE**

(71) Demandeur: Manufacture d'Horlogerie Audemars Piguet SA, 1348 Le Brassus (CH)
(72) Inventeur: Le Loarer, Thibaut, 74270 Chavannaz (FR)
(74) Mandataire: P&TS SA (AG, Ltd.)

(57) **Abrégé**

La présente invention concerne un procédé pour la fabrication d'une pièce en céramique technique (10). Ce procédé comporte les étapes suivantes: i) disposition dans un moule d'au moins une composition (p1 ; p1, p2 ; p1, p2, p3) de poudre de céramique comprenant au moins un oxyde métallique ; ii) réalisation d'un cycle de frittage SPS afin d'obtenir une ébauche (12) de la pièce en céramique à l'état réduit avec au moins une nuance de gris (n1 ; n1, n2 ; n1, n2, n3) à la surface de la pièce ; iii) usinage de l'ébauche (12) afin d'obtenir une ébauche de forme prédéterminée (14), et iv) réalisation d'une opération d'oxydation sur l'ébauche de forme prédéterminée (14). Cette opération d'oxydation permet de révéler au moins une couleur (c1 ; c1, c2 ; c1, c2, c3) résultant de l'oxydation dudit au moins un oxyde métallique au moins en surface d'une première partie de la pièce en céramique (10) alors que la surface d'une seconde partie de la pièce en céramique (10) revête ladite au moins une nuance de gris.

## Description

### Domaine technique

La présente invention concerne un procédé pour la fabrication d'une pièce en céramique technique, notamment un composant d'habillage dans le domaine de l'horlogerie ou de la joaillerie. Le procédé comporte entre autres une opération d'oxydation permettant de produire des pièces en céramique avec une plus grande variété d'effets esthétiques sans entacher leurs propriétés mécaniques.

### Etat de la technique

Dans le domaine horloger, les performances mécaniques des pièces horlogères, en particulier celles d'une carrure de montre sont importantes, afin de résister à des chocs intempestifs. Les éléments en céramiques ont cependant l'inconvénient d'être fragiles de par leur structure. Il existe différentes méthodes pour produire des pièces à base de céramique présentant des performances mécaniques améliorées.

CH718069 divulgue un procédé de fabrication d'un élément d'habillage en céramique permettant d'obtenir des éléments d'habillage présentant un aspect original tout en étant sensiblement homogène du point de vue de sa structure et de ses propriétés mécaniques. Ce procédé comporte les étapes consistant à :i) préparer une première composition de base, comprenant une poudre destinée à subir une opération de frittage visant à réaliser une céramique, ii) préparer une deuxième composition de base, comprenant une poudre destinée à subir une opération de frittage visant à réaliser une céramique, iii) traiter au moins l'une des première et deuxième compositions de base, préalablement à la mise en oeuvre de l'opération de frittage, pour y introduire au moins un pigment et définir des premier et deuxième réactifs respectifs, iv) placer les premier et deuxième réactifs dans un moule sous la forme d'au moins deux couches au moins partiellement adjacentes pour définir entre elles une interface de forme prédéfinie, et v) mettre en oeuvre une opération de frittage appliquée au moule contenant les premier et deuxième réactifs.

Ce procédé comporte en outre au moins une étape d'usinage du produit en céramique obtenu après l'opération de frittage, comprenant au moins une opération d'enlèvement de matière suivant un trajet intersectant l'interface, de telle manière qu'au moins une portion de l'interface soit visible à la surface de l'élément d'habillage et que ce dernier présente des variations de teinte et/ou de couleur à sa surface.

Ce procédé a l'inconvénient d'être complexe à mettre en oeuvre puisqu'il comporte de nombreuses étapes, notamment la préparation de la poudre comprenant un liant et un agent stabilisant ainsi qu'une étape de déliantage. La complexité de ce procédé a par conséquent un impact non négligeable sur le coût des pièces produites.

### Bref résumé de l'invention

Un but de la présente invention est par conséquent de proposer un procédé pour la fabrication d'une pièce en céramique technique dont la mise en oeuvre est simplifiée par rapport à l'art antérieur susvisé.

Un autre but de la présente invention est de proposer un procédé pour la fabrication d'une pièce en céramique technique dont les performances mécaniques sont accrues.

Un autre but de la présente invention est de proposer un procédé pour la fabrication pour une pièce en céramique technique, notamment une carrure de montre, permettant de produire des pièces avec une plus grande variété d'effets esthétiques sans entacher leurs propriétés mécaniques.

Un but additionnel de la présente invention est de proposer un procédé pour la fabrication d'une pièce en céramique technique, notamment une carrure de montre, comportant une étape de décoration sans apport de nouvelle matière.

Ces buts sont au moins en partie atteints notamment par un procédé pour la fabrication d'une pièce en céramique technique, comportant les étapes suivantes :
i) disposition dans un moule d'au moins une composition de poudre de céramique comprenant au moins un oxyde métallique ;
ii) réalisation d'un cycle de frittage SPS afin d'obtenir une ébauche de la pièce en céramique à l'état réduit avec au moins une nuance de gris à la surface de la pièce ;
iii) usinage de l'ébauche afin d'obtenir une ébauche de forme prédéterminée, et
iv) réalisation d'une opération d'oxydation sur l'ébauche de forme prédéterminée afin de révéler au moins une couleur résultant de l'oxydation dudit au moins un oxyde métallique au moins en surface d'une première partie de la pièce en céramique, la surface d'une seconde partie de la pièce en céramique revêtant ladite au moins une nuance de gris.

Selon une forme de réalisation, l'étape i) consiste à disposer dans le moule une première et une seconde composition comprenant chacune de la poudre de céramique et un oxyde métallique différent afin d'obtenir une première et une seconde nuance de gris après l'étape ii).

Selon une forme de réalisation, l'étape i) consiste à remplir le moule d'au moins trois compositions comprenant chacune de la poudre de céramique et un oxyde métallique différent afin d'obtenir trois nuances de gris après l'étape ii).

Selon une forme de réalisation, l'opération d'oxydation à l'étape iv) est réalisée par un faisceau laser ou un jet de plasma alimentée par un flux d'oxygène.

Selon une forme de réalisation, au moins l'un du faisceau laser et du jet de plasma est utilisé pour réaliser des motifs à un niveau de détails dont la résolution est fonction du diamètre du faisceau, respectivement du diamètre utile du jet de plasma.

Selon une forme de réalisation, l'opération d'oxydation consiste à réaliser une oxydation au moins en surface d'une sélection d'une ou plusieurs régions distinctes de la pièce en céramique.

Selon une forme de réalisation, l'oxydation de ladite sélection d'une ou plusieurs régions distinctes de la pièce en céramique conduit à réaliser un ou plusieurs motifs de forme déterminée revêtant au moins une couleur dépendant de l'oxyde métallique contenu dans la région oxydée de la pièce en céramique.

Selon une forme de réalisation, le procédé comporte en outre entre l'étape iii) et iv), une opération de traitement de surface d'au moins une région de l'ébauche de forme prédéterminée afin d'obtenir au moins une surface traitée dans lequel l'opération d'oxydation est réalisée sur une ou plusieurs régions dont la surface a été traitée préalablement.

Selon une forme de réalisation, un mouvement relatif est induit entre le jet de plasma, ou le faisceau laser, et l'ébauche de forme prédéterminée tout en faisant varier la distance entre le jet de plasma et ladite ébauche, respectivement la puissance du faisceau laser, afin d'obtenir une variation du degré d'oxydation sur ladite première partie de la pièce en céramique pour que celle-ci revête un dégradé de couleurs.

Selon une forme de réalisation, l'opération d'oxydation à l'étape iv) est réalisée en plaçant l'ébauche de forme prédéterminée dans un four sous oxygène ou à l'air pour une durée et un cycle de température prédéterminés. La durée et le cycle de température sont déterminés pour que l'oxydation intervienne, d'une part, sur au moins une partie de la surface de l'ébauche pour obtenir une couleur dépendant de l'oxyde métallique présent à la surface de l'ébauche et, d'autre part, dans la masse de l'ébauche selon une profondeur prédéterminée. L'opération d'oxydation est suivie par une opération consistant à enlever sélectivement une couche d'oxyde afin de révéler au moins une nuance de gris et/ou un dégradé de couleurs.

Selon une forme de réalisation, le cycle de température prédéterminé présente un cycle de montée en température d'environ 20°C à une température comprise entre 800°C et 1200 °C, dans un intervalle de temps compris entre 3h et 5h. Le cycle de montée en température est suivi d'un cycle de descente en température aux environs de 20°C dans un intervalle de temps compris entre 2h30 et 3h30. Cela permet d'oxyder, d'une part, ladite au moins une partie de la surface de l'ébauche pour obtenir une couleur dépendant de l'oxyde métallique présent à la surface et, d'autre part, la matière sous-jacente dans une épaisseur comprises entre 50 et 300 microns.

Selon une forme de réalisation, la matière est enlevée, selon un motif prédéterminé, jusqu'à une profondeur allant au-delà de celle de la masse oxydée de l'ébauche, afin de révéler une ou plusieurs nuances de gris.

Selon une forme de réalisation, la matière est enlevée, selon un motif prédéterminé et une profondeur variable, le long d'une trajectoire dans la masse oxydée afin de révéler un dégradé de couleur.

Selon une forme de réalisation, le cycle de frittage SPS est réalisé à une température comprise entre 1100 et 1300°C et dans un intervalle de temps compris entre 10 et 45 min.

Un autre aspect de l'invention porte sur un composant pour pièce d'horlogerie ou de joaillerie obtenu par le procédé susvisé, notamment une carrure ou une lunette de montre.

### Brève description des figures

Des exemples de mise en oeuvre de l'invention sont indiqués dans la description illustrée par les figures annexées dans lesquelles :
- les figures 1a à 1e illustrent des vues schématiques d'une carrure de montre au cours des différentes étapes de sa fabrication, selon une forme de réalisation ;
- les figures 2a à 2e illustrent des vues schématiques d'une carrure de montre au cours des différentes étapes de sa fabrication, selon une autre forme de réalisation ;
- les figures 3a à 3d illustrent des vues schématiques d'une carrure de montre au cours des différentes étapes de sa fabrication, et les figures 4a et 4b illustrent une dernière étape de décoration selon deux exemples, selon une autre forme de réalisation ;
- les figures 5a à 5d illustrent des vues schématiques d'une carrure de montre au cours des différentes étapes de sa fabrication, selon une autre forme de réalisation ;
- les figures 6a à 6e illustrent des vues schématiques d'une carrure de montre au cours des différentes étapes de sa fabrication, selon une autre forme de réalisation ;
- la figure 7 illustre une vue schématique de dessus de la carrure de montre de la figure 6e au cours du processus d'oxydation qui génère un dégradé de couleur par la projection d'un plasma d'oxygène via un jet de plasma au moyen d'une buse ;
- la figure 8 est un graphique illustrant la relation entre le degré d'oxydation de la carrure de montre et la distance entre la buse et la carrure, et
- la figure 9 illustre la carrure de montre de la figure 7 avec un dégradé de couleurs au niveau de sa partie centrale en fonction du degré d'oxydation et de la distance entre la buse et la partie centrale de la carrure.

### Exemples de mode de réalisation de l'invention

La description qui suit s'attache à décrire un procédé de fabrication d'un composant en céramique technique pour les domaines de l'horlogerie ou de la joaillerie, selon différentes formes de réalisation choisies à titre d'exemples non limitatifs. Plus particulièrement, le composant en céramique fabriqué par la mise en oeuvre du procédé, selon l'une quelconque des formes de réalisation décrites ci-après, est une carrure de montre. Bien entendu, l'homme du métier pourra mettre en oeuvre le même procédé pour la fabrication d'autres pièces en céramique sans sortir du cadre de l'invention.

Dans le contexte de la présente invention, on entend par « couleur » les couleurs autres que la palette de nuances de gris. Une couleur ou une palette de couleurs se rapporte dans le contexte de la présente invention à l'aspect visuel conféré à la surface ou à une partie visible d'une pièce en céramique qui a été révélé par une opération d'oxydation. La gamme de couleurs qui peut être obtenue dépend des oxydes métalliques présents dans la poudre en céramique. En outre, on entend par « au moins une nuance de gris », l'aspect visuel conféré à la surface d'une pièce en céramique une fois que la poudre de céramique ait subi un cycle de frittage SPS afin d'obtenir une ébauche de la pièce en céramique à l'état réduit sans avoir été soumis à une opération d'oxydation.

De manière générale, le procédé pour la fabrication d'une carrure de montre comporte deux étapes communes aux formes de réalisation décrites ci-après. La première étape vise à disposer dans un moule au moins une composition de poudre de céramique comprenant au moins un oxyde métallique. Cette étape est suivie d'une seconde étape visant à effectuer une opération de frittage flash, ou *«Field Assisted Sintering Technique*/*Spark Plasma Sintering (FAST*/*SPS)* » en anglais. Plus communément appelé frittage SPS, cette opération est un procédé qui s'apparente au pressage isostatique à chaud mais qui utilise l'effet joule pour chauffer une poudre précompactée dans un moule entre deux électrodes en graphite sous atmosphère inerte ou sous vide, le moule comprenant la poudre précompactée étant soumis à une pression de plusieurs mégapascals sous l'action d'une presse hydraulique. Un courant continu ou alternatif de plusieurs kiloampères, pulsé ou non, est appliqué entre les électrodes avec une tension de quelques volts.

Le frittage SPS est opéré à une température et une pression de frittage déterminées de sorte qu'aucune des poudres n'entre en fusion. La pression de frittage peut en l'occurrence être une pression mécanique. De préférence, la température de frittage est déterminée de sorte à rester inférieure à la plus basse des températures de fusion des poudres dans les conditions du frittage. La température de frittage adéquate peut être évaluée en fonction de la pression de frittage de sorte à ne pas atteindre ou ne pas dépasser, ou à rester inférieure aux températures de fusion des poudres à la pression de frittage.

Selon un mode de réalisation, la température de frittage SPS est inférieure à 2000°C, voire inférieure à 1500°C. La température de frittage SPS est par exemple comprise entre 1000°C et 1300°C dans un intervalle de temps compris entre 10 et 45 min.

La pression de frittage SPS peut être comprise entre 20 et 180 N/mm² ou entre 50 et 100 N/mm². D'autres valeurs de pression peuvent être préférées en fonction des composants sélectionnés et/ou de la qualité requise de la pièce mécanique finale.

L'opération de frittage SPS permet d'obtenir une pièce frittée préservant la finesse de la granularité de la céramique, ce qui pour avantage d'optimiser les propriétés mécaniques, notamment la dureté et la ténacité par rapport à un cycle de frittage conventionnel. Le frittage étant réalisé sous atmosphère inerte ou sous vide, on obtient une pièce frittée qui est à l'état réduit et dont la forme est dictée par la forme finale de la pièce.

Selon l'exemple d'une carrure de montre, la forme de l'ébauche frittée est sensiblement cylindrique avec un diamètre qui peut varier entre 40mm et 60mm, par exemple sensiblement égal à 50mm et dont l'épaisseur est comprise entre 15 et 20mm, par exemple 18mm.

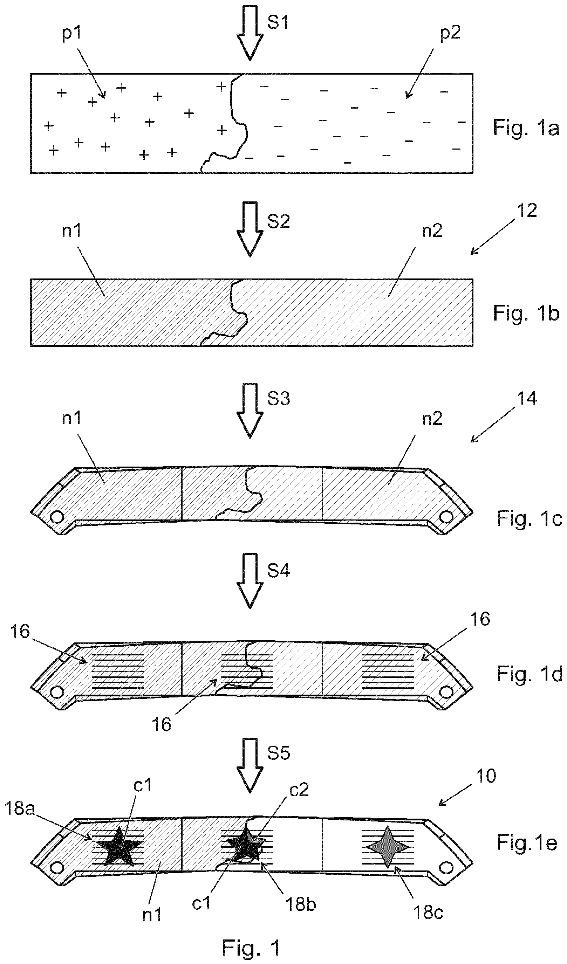

Selon une première forme de réalisation et en référence aux figures 1a à 1e, le procédé pour la fabrication de la carrure de montre 10 en céramique comporte une première étape S1 consistant à disposer dans un moule (non-illustré) une première et une seconde composition p1, p2 comprenant chacune de la céramique en poudre, de préférence de la zircone, notamment de la zircone stabilisée à l'oxyde d'yttrium, et au moins un oxyde métallique différent, de préférence sélectionné notamment parmi l'oxyde de fer, l'oxyde d'aluminium, l'oxyde de bismuth et l'oxyde de chrome.

Les première et seconde compositions p1, p2 sont réparties dans le moule sans être mélangées comme illustré à la figure 1a. Plus, particulièrement, les première et seconde compositions p1, p2 sont disposées l'une à côté de l'autre afin de former une interface entre les deux compositions p1, p2 s'étendant selon une direction pouvant être sensiblement perpendiculaire au fond du moule.

Dans une deuxième étape S2, une opération de frittage SPS est effectuée afin d'obtenir une ébauche 12 de la carrure de montre, selon la figure 1b, qui possède en surface deux nuances de gris n1, n2 se rejoignant à une interface pouvant être sensiblement perpendiculaire au plan général moyen de la carrure 10. Selon une variante non-illustrée trois, quatre, voire cinq compositions différentes ou plus sont disposées les unes à côté des autres afin d'obtenir après l'opération de frittage SPS, une ébauche de la carrure de montre avec autant ou une pluralité de nuances de gris en surface afin que leurs interfaces respectives s'étendent, de préférence, sensiblement perpendiculairement au plan général moyen de la carrure.

Selon une autre variante non-illustrée au moins deux compositions différentes, par exemple trois, quatre voire cinq compositions différentes ou plus sont réparties dans la moule afin de former autant ou une pluralité de couches distinctes superposées. Une ébauche de la carrure de montre comportant deux, trois, quatre, voire cinq nuances de gris ou plus se rejoignant, en des interfaces respectives pouvant être sensiblement parallèles, est ainsi obtenue après l'opération de frittage SPS. Ces interfaces peuvent être essentiellement parallèles ou inclinées par rapport au plan général de la carrure de montre.

Chaque composition p1, p2 peut contenir un ou plusieurs oxydes métalliques différents parmi notamment un oxyde de fer, un oxyde d'aluminium, un oxyde de Cérium, un oxyde de bismuth et un oxyde de chrome. Les deux compositions p1, p2 peuvent par exemple représenter chacune un volume sensiblement équivalent. Les compositions p1, p2 sont disposées dans le moule relativement l'une par rapport à l'autre en fonction de l'emplacement souhaité des différentes nuances de gris n1, n2 sur la pièce finie. Les compositions p1, p2 peuvent également se différentier sur la base de leurs céramiques en poudre, par exemple une composition p1 à base de zircone et une composition p2 à base d'alumine ou autre,

Une fois l'opération de frittage SPS réalisée, le procédé comporte une troisième étape S3 consistant à usiner l'ébauche 12 afin d'obtenir une ébauche de forme prédéterminée 14 qui correspond généralement aux dimensions finales de la pièce en céramique, c'est-à-dire à la forme d'une carrure de montre dans le cas présent, telle qu'illustrée à la figure 1c. L'usinage est réalisé par des moyens conventionnels, notamment par fraisage et/ou meulage.

Le procédé peut comporter une étape de traitement de surface S4 selon la figure 1d. Cette étape, qui est optionnelle, consiste à réaliser sur une ou plusieurs régions au niveau de la surface de la pièce, en particulier sur le flanc de la carrure, une décoration par une opération mécanique et/ou chimique. L'opération mécanique peut être notamment un polissage, un sablage, un satinage du type rectiligne, circulaire ou colimaçon, un microbillage, un guillochage, un perlage, une finition côte de Genève ou une gravure main. Dans cet exemple, l'ébauche usinée 14 a subi un traitement de surface afin de comporter une ou plusieurs surfaces 16 avec une décoration obtenue par l'une ou l'autre des opérations mécaniques précitées.

Pour les pièces comportant plusieurs régions séparées les unes des autres qui ont subies un traitement de surface, le même type de traitement de surface peut être appliqué à toutes ces régions, par exemple un sablage, ou selon une variante, le type de traitement peut varier d'une région à l'autre, par exemple un sablage pour une première région, un satinage pour une deuxième région et un polissage pour une troisième région. Selon une variante, ces différentes régions peuvent être adjacentes.

Le procédé comporte une dernière étape S5 consistant à décorer l'ébauche, par exemple selon l'illustration schématique de la figure 1e. Cette étape de décoration S5 consiste à effectuer une opération d'oxydation sur au moins une partie de la carrure de montre, notamment sur son flanc, afin de révéler la couleur de l'oxyde métallique à la surface de la pièce. Selon la figure 1e, l'opération d'oxydation consiste à oxyder sélectivement la surface de la carrure de montre 10, par exemple sur une profondeur de 50 microns, afin que la forme de la surface oxydée corresponde à la forme du motif désiré. Cette opération entraîne une réaction chimique déclenchée par l'oxygène au contact de l'oxyde ou des oxydes métalliques présents à la surface de la pièce. Cette réaction permet aux différents oxydes de révéler leurs couleurs vives.

Les motifs 18a, 18b, 18c, qui sont schématisés dans cet exemple par trois étoiles, revêtent différentes couleurs. La première étoile 18a revête une première couleur propre à l'oxyde ou aux oxydes métalliques présents dans la première composition p1, la seconde étoile 18b revête deux couleurs différentes propres à l'oxyde ou aux oxydes métalliques présents respectivement dans la première composition p1 et dans la seconde composition p2 alors que la troisième étoile 18c revête une autre couleur propre à l'oxyde ou aux oxydes métalliques présents dans la seconde composition p2.

A titre d'exemple, les compositions p1 et p2 peuvent comporter respectivement un oxyde de bismuth et oxyde d'aluminium afin d'obtenir une ébauche selon la figure 1b où les compositions p1 et p2 à l'état réduit revêtent une nuance gris foncé et gris clair respectivement. La nuance du gris foncé et du gris clair peut être plus ou moins soutenue en fonction de la concentration des oxydes dans les deux compositions. Après l'étape d'oxydation illustrée à la figure 1e, le premier motif 18a aura une couleur c1 homogène tendant vers le bleu plus ou moins soutenu en fonction de la concentration de l'oxyde de bismuth. Le troisième motif 18c aura une couleur c3 tendant vers le blanc plus ou moins soutenu en fonction de la concentration de l'oxyde d'aluminium alors que le second motif bicolor aura une combinaison des deux couleurs précitées.

La carrure 10 obtenue selon cette première forme de réalisation possède par conséquent deux nuances de gris n1, n2 en surface et différentes décorations 18a, 18b, 18c qui se présentent sous la forme d'étoiles dans cet exemple et qui possèdent des couleurs vives, lesquelles dépendent de l'oxyde ou des oxydes métalliques présents à la surface au niveau de ces étoiles. Les étoiles 18 sont de préférence réalisées sur les régions de la carrure ayant subi un traitement de surface 16, tel que décrit précédemment, pour donner un contraste supplémentaire aux décorations 18a, 18b, 18c. Les décorations peuvent tout aussi bien être réalisées sur des régions de la carrure de montre n'ayant pas subi de traitement de surface au préalable selon une variante non-illustrée.

L'opération d'oxydation peut par exemple être réalisée par une source laser dont la chaleur localisée permet de créer une couche d'oxyde localisée. La source laser peut par exemple être commandée de sorte à ce que le laser parcourt sur la surface de la carrure 10 un chemin prédéfini reproduisant un motif, par exemple un motif répétitif ou encore un texte.

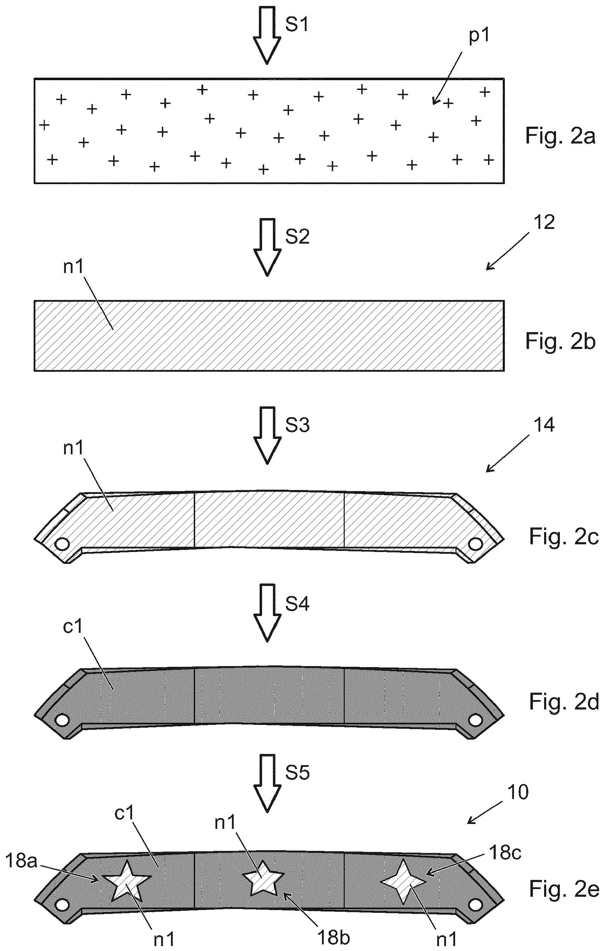

Selon une deuxième forme de réalisation et en référence aux figures 2a à 2e, le procédé pour la fabrication de la pièce en céramique comporte une première étape S1 consistant à remplir le moule (non-illustré) d'une seule composition p1 comportant un ou plusieurs oxydes métalliques puis d'effectuer, au cours d'une deuxième étape S2, une opération de frittage SPS, telle que décrite en référence à la première forme de réalisation, afin d'obtenir une ébauche 12 de la carrure de montre sous la forme d'un disque à l'état réduit. L'aspect visuel de la céramique revête à cet instant qu'une seule nuance de gris n1 homogène telle qu'illustrée à la figure 2b.

A l'instar de la première forme de réalisation, le procédé comporte une troisième étape S3 consistant à usiner l'ébauche 12 de la carrure de montre dans ses dimensions finales une fois l'opération de frittage réalisée, comme illustré à la figure 2c.

L'opération consistant à décorer l'ébauche usinée 14 comporte, selon cette forme de réalisation, deux étapes. L'étape préalable S4 consiste à effectuer une opération d'oxydation sur au moins une partie de la surface de l'ébauche. De préférence, l'intégralité de la surface de l'ébauche est oxydée.

Pour ce faire, l'ébauche usinée 14 est placée dans un four sous oxygène ou à l'air pour une durée et un cycle de température prédéterminé afin que l'oxydation intervienne, d'une part, à la surface de l'ébauche de la pièce afin d'obtenir une couleur associée au type de l'oxyde ou des oxydes métalliques présents à la surface de la pièce et, d'autre part, dans la masse de la pièce, à savoir au moins à une certaine profondeur qui ne peut plus être considérée comme faisant partie de la surface de la pièce.

Le cycle de température prédéterminé présente typiquement un cycle de montée en température d'environ 20°C à une température comprise entre 800°C et 1200 °C, de préférence aux environs de 1000 °C, dans un intervalle de temps compris entre 3h et 5h, de préférence environ 4h. Le cycle de montée en température est suivi d'un cycle de descente en température aux environs de 20°C dans un intervalle de temps compris entre 2h30 et 3h30, de préférence environ 3h. Ce cycle de température permet d'oxyder, d'une part, la surface de l'ébauche de la pièce afin d'obtenir une seule couleur homogène c1 associée au type de l'oxyde ou des oxydes métalliques présents à la surface de l'ébauche et, d'autre part, la matière sous-jacente dans une épaisseur comprise de préférence entre 50 et 300 microns.

L'opération d'oxydation est suivie par l'étape S5 visant à enlever sélectivement toute l'épaisseur de la couche d'oxyde en surface de la pièce et proche de la surface selon une ou plusieurs formes décoratives quelconques, qui sont trois étoiles 18a, 18b, 18c dans cet exemple, pour y révéler la céramique à l'état réduit, présente sous la couche d'oxyde, correspondant à une nuance de gris n1.

L'enlèvement sélectif de la couche d'oxyde peut se faire par exemple par usinage conventionnel ou pour des motifs à haut niveau de détails au moyen d'une source laser utilisée comme outil d'usinage.

La carrure de montre 10 obtenue par le procédé selon cette forme de réalisation possède ainsi un aspect visuel général comportant une surface substantiellement homogène teintée d'une couleur vive en fonction de l'oxyde ou des oxydes métalliques à la surface de la pièce ainsi qu'une ou plusieurs décorations 18a, 18b, 18c révélant une nuance de gris n1 qui correspond à la céramique sous-jacente à l'état réduit.

Selon une variante non-illustrée, la profondeur de l'enlèvement de matière varie dans l'épaisseur de la couche d'oxyde le long d'une trajectoire afin de révéler un dégradé de couleurs correspondant à différents degrés d'oxydation de l'oxyde ou des oxydes présents dans la composition p1.

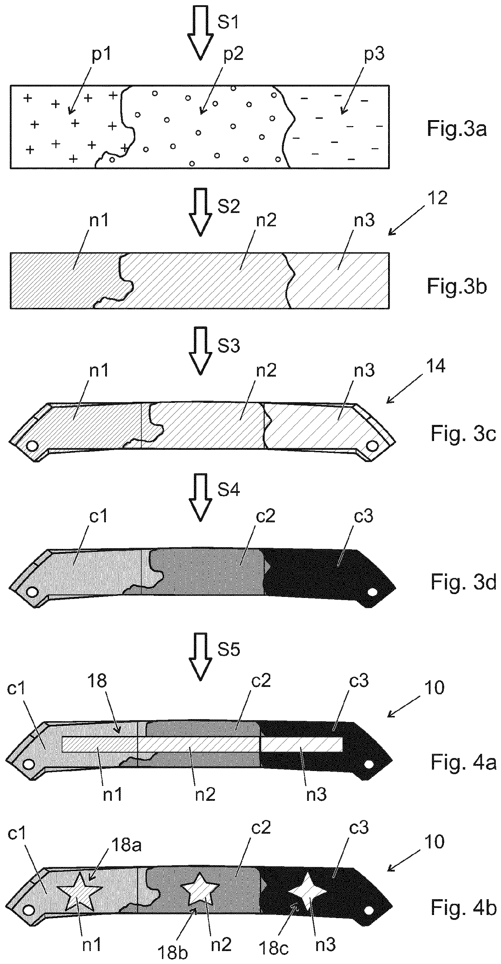

Selon une troisième forme de réalisation et en référence aux figures 3a à 3d, le procédé pour la fabrication de la pièce en céramique comporte une première étape S1 consistant à remplir le moule (non-illustré) de trois compositions p1, p2, p3, comprenant chacune de la céramique en poudre, de préférence de la zircone, notamment de la zircone stabilisée à l'oxyde d'yttrium, et au moins un oxyde métallique différent. Les trois compositions p1, p2, p3 sont réparties dans le moule sans être mélangées. Chaque composition p1, p2, p3 peut contenir un ou plusieurs oxydes métalliques différents.

Une opération S2 de frittage SPS est effectuée, selon le processus décrit en référence à la première forme de réalisation, afin d'obtenir une ébauche 12 de carrure de montre à l'état réduit, telle qu'illustrée à la figure 3b. L'opération frittage SPS permet de révéler trois nuances de gris n1, n2, n3 homogènes se rejoignant au niveau de deux interfaces. Une opération d'usinage S3 est réalisée sur la pièce frittée afin d'obtenir les dimensions finales de l'ébauche de forme prédéterminée 14 de la carrure de montre illustrée à la figure 3c.

Une opération d'oxydation S4 est ensuite réalisée sur l'intégralité de la surface de l'ébauche 14. L'oxydation des parties revêtant les trois nuances de gris permet de révéler trois couleurs vives différente c1, c2, c3. L'opération d'oxydation est suivie d'une opération S5 consistant à enlever sélectivement la couche d'oxyde afin de former une décoration comportant un ou plusieurs motifs. Les figures 4a, 4b illustrent une carrure de montre 10, obtenue par le procédé selon cette forme de réalisation, comportant une surface générale possédant trois couleurs vives distinctes avec deux exemples de décoration. La carrure 10 selon la figure 4a comporte une décoration sur son flanc sous la forme d'une rainure 18 le long de laquelle apparait successivement les trois nuances de gris n1, n2, n3. La carrure 10 de la figure 4b comporte une décoration sur son flanc sous la forme de trois motifs distincts, par exemple trois étoiles 18a, 18b, 18c revêtant respectivement les trois nuances de gris n1, n2, n3.

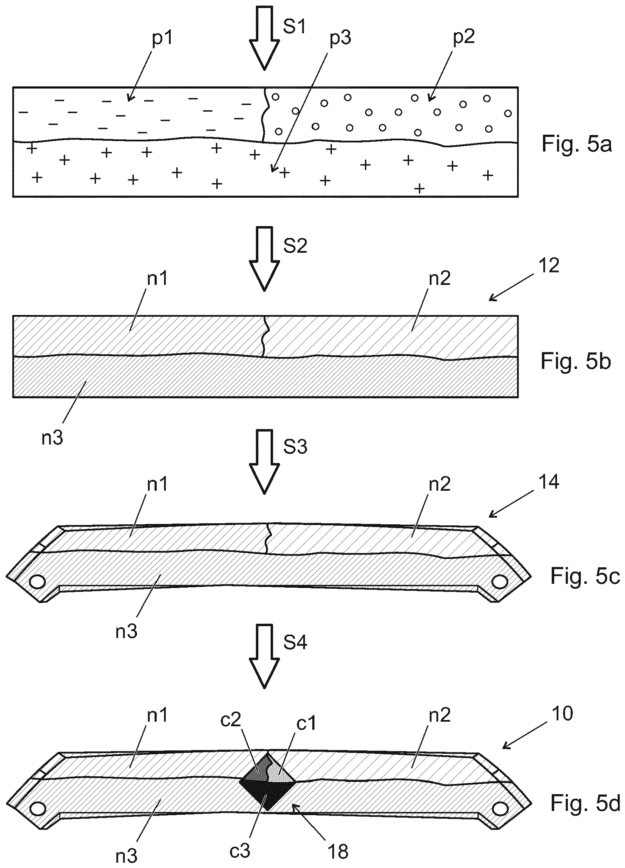

Les figures 5a à 5d illustrent une quatrième forme de réalisation, dont les trois premières étapes S1, S2, S3 sont identiques aux trois premières étapes de la forme de réalisation qui vient d'être décrite. La surface de l'ébauche de forme prédéterminée 14 obtenue à la figure 5c est ensuite oxydée sélectivement selon un ou plusieurs motifs quelconques 18 afin de créer une décoration au niveau d'une région regroupant les trois nuances de gris n1, n2, n3. L'oxydation permet de révéler trois couleurs vives c1, c2, c3 propres au type de l'oxyde ou des oxydes métalliques présents dans les différentes compositions p1, p2, p3.

La carrure de montre 10 obtenue par le procédé selon cette forme de réalisation possède un aspect visuel général comportant une surface avec trois nuances de gris n1, n2, n3 ainsi qu'une ou plusieurs décorations révélant trois couleurs vives c1, c2, c3.

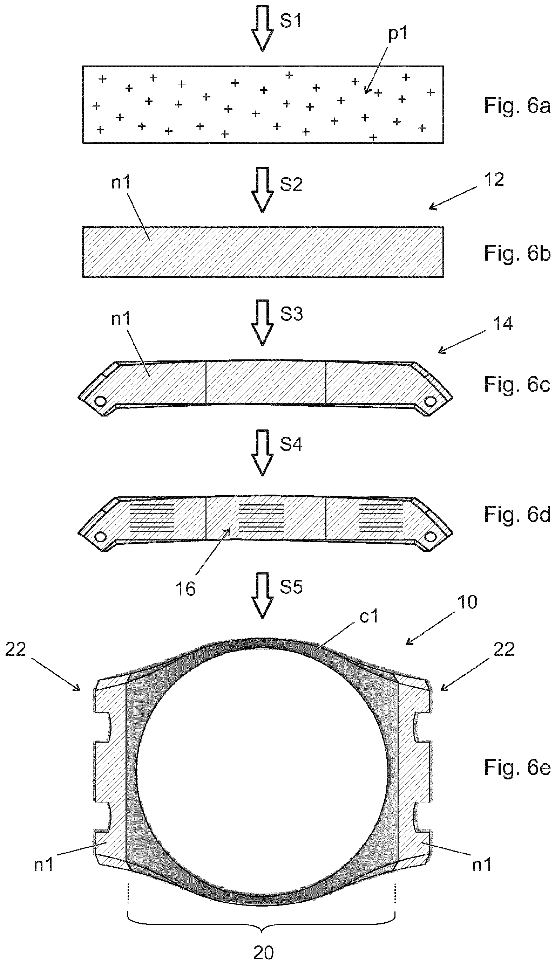

Selon une autre forme réalisation illustrée par les figures 6a à 6e, les trois premières étapes S1, S2, S3 sont identiques aux trois premières étapes du procédé selon la deuxième forme de réalisation. L'étape d'usinage S3 peut être suivie par une étape optionnelle S4 consistant à effectuer un traitement de surface, décrit précédemment, afin d'obtenir sur le flanc de la carrure une ou plusieurs surfaces avec un certain type de finition. L'étape d'usinage S3 ou l'étape de traitement de surface S4 est suivie d'une étape d'oxydation S5 sur une partie centrale 20 de la carrure de montre par projection d'un flux plasma d'oxygène. La carrure 10 ainsi obtenue comporte une surface générale d'une couleur vive c1 ainsi qu'une nuance de gris n1 au niveau d'une partie 22 comprenant les cornes.

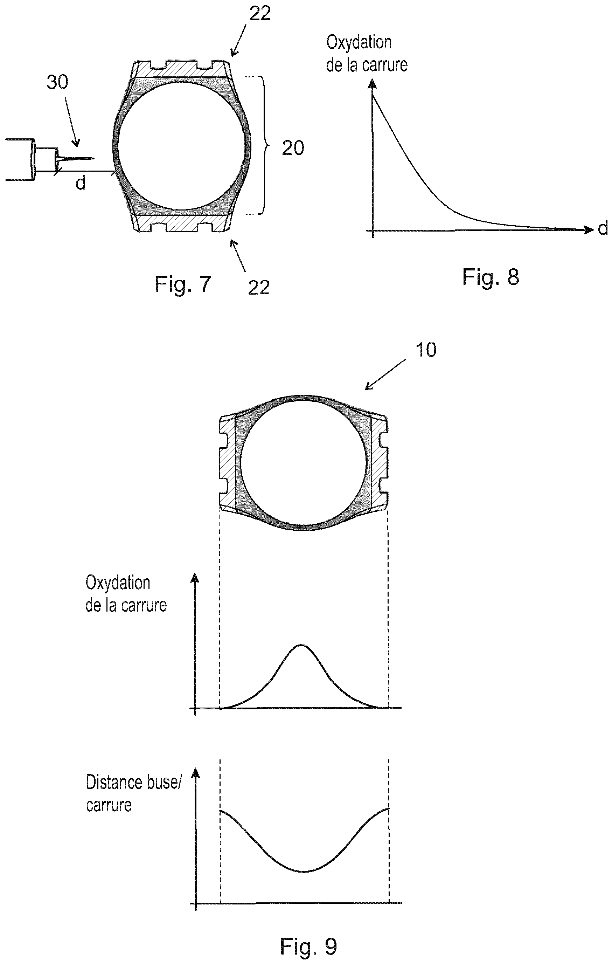

En se référant aux figures 7-9, la projection d'un flux plasma d'oxygène est réalisée au moyen d'une buse générant un jet de plasma 30. La carrure 10 ou le jet de plasma 30, en particulier la buse de laquelle est émis ce jet, peut être déplacé afin d'induire un mouvement relatif de la projection du flux plasma d'oxygène sur la partie centrale 20 de la carrure. Dans une forme de réalisation avantageuse, la buse ou la carrure 10 peut être déplacée de sorte à faire varier la distance entre le jet de plasma 30 et la carrure, plus particulièrement entre le diamètre utile du jet de plasma de forme essentiellement conique et la carrure, et en pratique la distance d entre la buse et la carrure. Cette variation de distance permet d'obtenir, d'une part, une variation du degré d'oxydation sur la partie centrale 20 afin que celle-ci revête un dégradé de couleurs et, d'autre part, une nuance de gris au niveau des cornes 22.

On notera que, quel que soit le mode de réalisation envisagé, le recours au faisceau laser et/ou au jet de plasma 30 pour réaliser l'opération d'oxydation peut être utilisé aussi bien pour obtenir des motifs choisis, voire aléatoires, que des aplats à la surface de l'ébauche de forme prédéterminée 14. De tels aplats peuvent consister en des surfaces ou zones aussi bien unies, dégradées que mixtes. Il en va de même pour les motifs précités, lesquels pourraient également être réalisés tout ou partie en dehors ou au sein de ces surfaces.

Bien que le procédé ait été décrit principalement pour la fabrication d'une carrure de montre en céramique technique, le procédé peut être appliqué à d'autres pièces en céramique sans s'écarter de l'invention telle que définie par les revendications. Ce procédé peut par exemple être appliqué à tout type de composant horloger, notamment à des composants d'un mouvement de montre destinés à être visibles côté fond d'une boite de montre à travers une glace saphir, ou à des composants d'habillage tant dans le domaine de l'horlogerie que dans le domaine de la joaillerie.

## Revendications

1. Procédé pour la fabrication d'une pièce en céramique technique (10), comportant les étapes suivantes :
i) disposition dans un moule d'au moins une composition (p1 ; p1, p2 ; p1, p2, p3) de poudre de céramique comprenant au moins un oxyde métallique ;
ii) réalisation d'un cycle de frittage SPS afin d'obtenir une ébauche (12) de la pièce en céramique à l'état réduit avec au moins une nuance de gris (n1 ; n1, n2 ; n1, n2, n3) à la surface de la pièce ;
iii) usinage de l'ébauche (12) afin d'obtenir une ébauche de forme prédéterminée (14), et
iv) réalisation d'une opération d'oxydation sur l'ébauche de forme prédéterminée (14) afin de révéler au moins une couleur (c1 ; c1, c2; c1, c2, c3) résultant de l'oxydation dudit au moins un oxyde métallique au moins en surface d'une première partie de la pièce en céramique (10), la surface d'une seconde partie de la pièce en céramique (10) revêtant ladite au moins une nuance de gris.

2. Procédé selon la revendication 1, dans lequel l'étape i) consiste à disposer dans le moule une première et une seconde composition (p1, p2) comprenant chacune de la poudre de céramique et un oxyde métallique différent afin d'obtenir une première et une seconde nuance de gris (n1, n2) après l'étape ii).

3. Procédé selon la revendication 1, dans lequel l'étape i) consiste à remplir le moule d'au moins trois compositions (p1, p2, p3) comprenant chacune de la poudre de céramique et un oxyde métallique différent afin d'obtenir trois nuances de gris (n1, n2, n3) après l'étape ii).

4. Procédé selon l'une des revendications précédentes, dans lequel l'opération d'oxydation à l'étape iv) est réalisée par un faisceau laser ou un jet de plasma (30) alimentée par un flux d'oxygène.

5. Procédé selon la revendication précédente, dans lequel au moins l'un du faisceau laser et du jet de plasma (30) est utilisé pour réaliser des motifs à un niveau de détails dont la résolution est fonction du diamètre du faisceau, respectivement du diamètre utile du jet de plasma (30).

6. Procédé selon la revendication 4 ou 5, dans lequel l'opération d'oxydation consiste à réaliser une oxydation au moins en surface d'une sélection d'une ou plusieurs régions distinctes de la pièce en céramique.

7. Procédé selon la revendication précédente, dans lequel l'oxydation de ladite sélection d'une ou plusieurs régions distinctes de la pièce en céramique conduit à réaliser un ou plusieurs motifs (18) de forme déterminée revêtant au moins une couleur (c1, c2, c3) dépendant de l'oxyde métallique contenu dans la région oxydée de la pièce en céramique.

8. Procédé selon l'une des revendications 5 à 7, comportant en outre, entre l'étape iii) et iv), une opération de traitement de surface d'au moins une région de l'ébauche de forme prédéterminée (14) afin d'obtenir au moins une surface (16) traitée dans lequel l'opération d'oxydation est réalisée sur une ou plusieurs régions (16) dont la surface a été traitée préalablement.

9. Procédé selon la revendication 4, dans lequel un mouvement relatif est induit entre le jet de plasma (30), ou le faisceau laser, et l'ébauche de forme prédéterminée (14) tout en faisant varier la distance entre le jet de plasma (30) et ladite ébauche, respectivement la puissance du faisceau laser, afin d'obtenir une variation du degré d'oxydation sur ladite première partie de la pièce en céramique pour que celle-ci revête un dégradé de couleurs.

10. Procédé selon l'une des revendications 1 à 3, dans lequel l'opération d'oxydation à l'étape iv) est réalisée en plaçant l'ébauche de forme prédéterminée (14) dans un four sous oxygène ou à l'air pour une durée et un cycle de température prédéterminés afin que l'oxydation intervienne, d'une part, sur au moins une partie de la surface de l'ébauche (14) pour obtenir une couleur dépendant de l'oxyde métallique présent à la surface de l'ébauche (14) et, d'autre part, dans la masse de l'ébauche selon une profondeur prédéterminée, l'opération d'oxydation étant suivie par une opération consistant à enlever sélectivement une couche d'oxyde afin de révéler au moins une nuance de gris (n1, n2, n3) et/ou un dégradé de couleurs (c1, c2, c3).

11. Procédé selon la revendication précédente, dans lequel le cycle de température prédéterminé présente un cycle de montée en température d'environ 20°C à une température comprise entre 800°C et 1200 °C, dans un intervalle de temps compris entre 3h et 5h, suivi d'un cycle de descente en température aux environs de 20°C dans un intervalle de temps compris entre 2h30 et 3h30 afin d'oxyder, d'une part, ladite au moins une partie de la surface de l'ébauche (14) pour obtenir une couleur dépendant de l'oxyde métallique présent à la surface et, d'autre part, la matière sous-jacente dans une épaisseur comprises entre 50 et 300 microns.

12. Procédé selon la revendication 10 ou 11, dans lequel la matière est enlevée, selon un motif prédéterminé, jusqu'à une profondeur allant au-delà de celle de la masse oxydée de l'ébauche (14), afin de révéler une ou plusieurs nuances de gris (n1, n2, n3).

13. Procédé selon la revendication 10 ou 11, dans lequel la matière est enlevée, selon un motif prédéterminé et une profondeur variable, le long d'une trajectoire dans la masse oxydée afin de révéler un dégradé de couleur (c1, c2, c3).

14. Procédé selon l'une des revendications précédentes, dans lequel le cycle de frittage SPS est réalisé à une température comprise entre 1100 et 1300°C et dans un intervalle de temps compris entre 10 et 45 min.

15. Composant pour pièce d'horlogerie ou de joaillerie obtenu par le procédé selon l'une des revendications précédentes.
